# EUROPÄISCHE PATENTSCHRIFT

(11) **EP 1 454 700 B1**
(45) Veröffentlichungstag und Bekanntmachung des Hinweises auf die Patenterteilung: **24.05.2006**
(21) Anmeldenummer: 03004784.9
(22) Anmeldetag: 05.03.2003
(51) Int. Cl.: B23K 26/14, B23K 26/16, B23K 26/38

(54) **Kühl- und/oder Spüllanze einer Laserbearbeitungsmaschine und Verfahren zum Absaugen von Partikeln, Gasen oder Dämpfen bei einer Laserbearbeitung**
Cooling- and/or rincing lance for a laser machining apparatus and method for extraction of particles, gases or fumes during laser machining
Lance de refroidissement et/ou de soufflage pour un dispositif d'usinage par laser et méthode d'aspiration des particules, des gaz ou des fumées pendant un usinage par laser

(43) Veröffentlichungstag der Anmeldung: 08.09.2004
(73) Patentinhaber: TRUMPF Werkzeugmaschinen GmbH + Co. KG, 71254 Ditzingen (DE)
(72) Erfinder: Wessner Michael, 70839 Gerlingen (DE)
(74) Vertreter: Bäcker, Rüdiger

(56) Entgegenhaltungen:
- EP-A- 1 175 953
- WO-A-00/69594
- DE-U- 20 216 214
- US-A- 5 345 057
- PATENT ABSTRACTS OF JAPAN vol. 017, no. 053 (M-1361), 3. Februar 1993 (1993-02-03) & JP 04 262889 A (OLYMPUS OPTICAL CO LTD), 18. September 1992 (1992-09-18)
- PATENT ABSTRACTS OF JAPAN vol. 1999, no. 09, 30. Juli 1999 (1999-07-30) & JP 11 090661 A (OLYMPUS OPTICAL CO LTD), 6. April 1999 (1999-04-06)
- PATENT ABSTRACTS OF JAPAN vol. 010, no. 171 (M-489), 17. Juni 1986 (1986-06-17) & JP 61 020680 A (NIPPON SENBAI KOSHA;OTHERS: 01), 29. Januar 1986 (1986-01-29)

## Beschreibung

Die Erfindung betrifft das Absaugen von Partikeln, Dämpfen oder Gasen von einem Werkstück bei der Laserbearbeitung des Werkstücks, beispielsweise beim Laserschneiden von Rohren.

Beim Laserschneiden von Rohren lagert sich der Schmelzaustrieb, in Form von Spritzern, stets im Rohrinnern des Rohres ab. Dies erfordert oft einen zusätzlichen Arbeitsgang, um die Rohre zu säubern.

Durch die technische Lehre gemäß der DE 202 16 214 U1 wird eine mit einem Absauggebläse in Verbindung stehende Hohllanze vorgeschlagen. Die Hohllanze befindet sich beim Laserschneiden unterhalb des zu bearbeitenden Werkstücks oder beispielsweise in einem zu bearbeitenden Rohr. Mit Hilfe der Hohllanze können beim Schneiden entstehende Partikel, Dämpfe und Gase abgesaugt werden.

Weiterhin trifft der Laserstrahl mit der von der Schnittfuge nicht absorbierten Leistung auf die gegenüberliegende Unterseite des Rohres und führt dort zu einer Überhitzung, die wiederum zu einer Gratbildung oder zum Aufschmelzen dieses Rohrbereichs führt.

Hinsichtlich der Bearbeitung von Rohren muss beachtet werden, dass ein kleiner Rohrdurchmesser einen noch kleineren Lanzendurchmesser erfordert, um die Lanze in das Rohrinnere einführen zu können. Kleine Lanzendurchmesser beeinträchtigen jedoch die Strömungsverhältnisse und die Absaugwirkung. Darüber hinaus ist eine Absaugung bei sehr kleinen Rohrdurchmessern mit den bisher bekannten Mitteln unmöglich.

Der Anmelder hat sich die Aufgabe gestellt, eine zufrieden stellende Absaug- und Kühlwirkung bei kleinen Lanzendurchmessern zu erreichen.

Diese Aufgabe wird durch eine Kühl- und/oder Spüllanze gemäß Patentanspruch 1 und ein Verfahren gemäß Patentanspruch 7 gelöst. Zur Verbesserung der Strömungsdynamik des absorbierenden Mediums soll erfindungsgemäß eine zugeführte Mischung aus einem flüssigen und einem gasförmigen Medium, beispielsweise Wasser und Pressluft, eingesetzt werden. Das Wasser wird zusammen mit der Pressluft durch eine Düse geführt und zu einer Art Wassernebel verdüst. Der Wassernebel absorbiert während der Schneidbearbeitung genügend Strahlleistung und führt die Schneidspritzer ab.

Die Zusammenführung der beiden Medien in der gemeinsamen Kammer kann auf einfache Weise dadurch erreicht werden, dass die Mittel zum Zuführen durch jeweils eine Zuführöffnung und einen gemeinsamen Kanal zu der gemeinsamen Kammer ausgebildet sind.

Für eine einfache Bauweise der Kühl- und/oder Spüllanze ist es vorteilhaft, dass die Kühl- und/oder Spüllanze aus ineinander gesteckten rohrförmigen Lanzenteilen aufgebaut ist.

Der Kühl- und Reinigungseffekt durch die Kühl- und/oder Spüllanze kann dadurch weiter verbessert werden, indem das Gas-Flüssigkeitsgemisch die Kühl- und/oder Spüllanze kontinuierlich durchströmt, wenn die Kühl- und/oder Spüllanze an eine Absaugeinrichtung für das Gas-Flüssigkeitsgemisch aus dem Lanzeninnenraum angeschlossen ist.

Bevorzugte Medien für den Kühl- und/oder Spülvorgang sind Wasser und Pressluft. Es sind auch andere geeignete Medien einsetzbar.

Erfindungswesentlich ist es, so wie es insbesondere durch das beanspruchte Verfahren gemäß Patentanspruch 1 zum Ausdruck kommt, dass ein Fluid aus flüssigen und gasförmigen Bestandteilen erzeugt und zum Kühlen und Absaugen benutzt wird. Die Verwendung des Gas-Flüssigkeitsgemisch erhöht den Wirkungsgrad und ermöglicht eine kompaktere Bauweise der Komponenten zum Kühlen und Absaugen.

Ein Ausführungsbeispiel der Erfindung ist in der Zeichnung schematisch dargestellt und wird nachfolgend mit Bezug zu den Figuren der Zeichnung näher erläutert. Es zeigt:
- **Fig. 1**: eine Seitenansicht von Teilen einer Laserschneidanlage;
- **Fig. 2**: eine vergrößerte Darstellung einer Kühl- und/oder Spüllanze der Laserschneidanlage im Längsschnitt

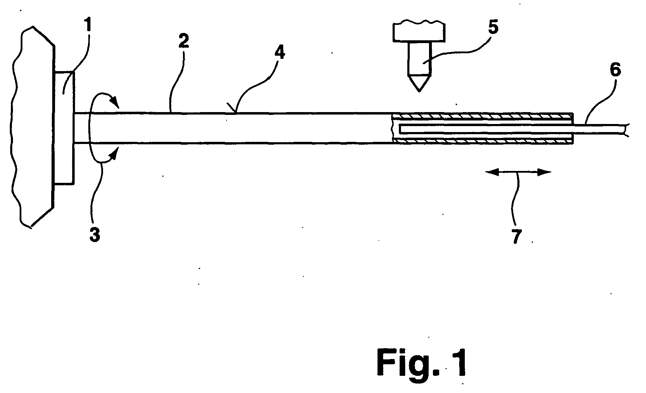

Aus der **Fig. 1** ist die Arbeitsweise einer an sich bekannten und daher nicht näher beschriebenen Laserschneidanlage ersichtlich, welche ein Spannfutter **1** zur Halterung eines zu bearbeitendes Rohres **2** umfasst. Das Rohr 2 ist drehbar gehaltert (siehe Drehrichtung **3**), damit die Rohraußenumfangsfläche **4** durch einen Laserstrahl bearbeitet werden kann, welcher aus einem nur angedeuteten Bearbeitungskopf **5** der Laserschneidanlage austreten und auf die Rohraußenumfangsfläche 4 fokussiert werden kann. Der Bearbeitungskopf 5 ist in X-, Y- und Z-Richtung über der Rohraußenumfangsfläche 4 positionierbar. Die Laserschneidanlage ermöglicht es, Löcher, Ausnehmungen, Einschnitte und Trennschnitte usw. in das Rohr 2 zu schneiden.

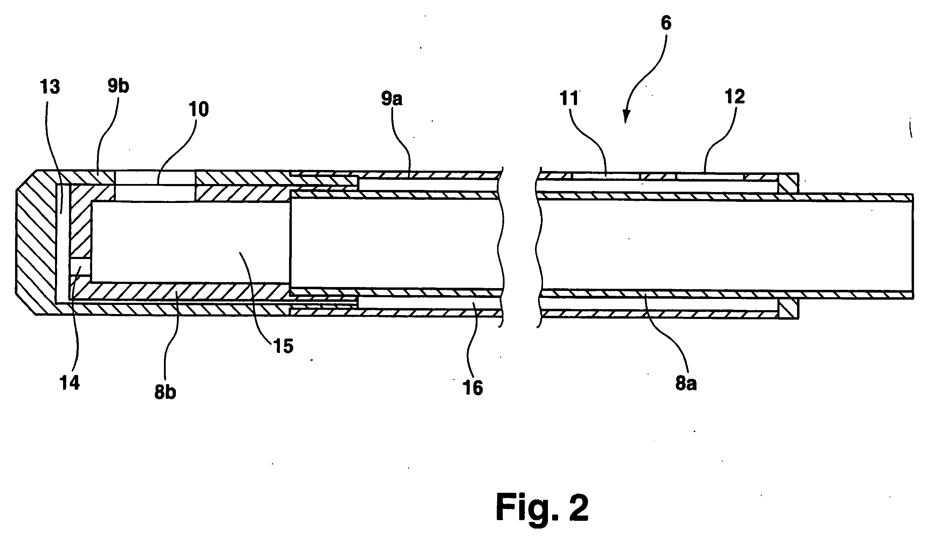

In das Rohr 2 ist eine zum Rohr 2 konzentrisch angeordnete rohrförmige Kühl- und/oder Spüllanze **6** hinein- und herausschiebbar (siehe Doppelpfeil **7**) angeordnet, um zu verhindern, dass sich beim Laserschneiden des Rohres 2 der Schmelzaustrieb, in Form von Spritzern, im Rohrinnern ablagert. Die Kühl- und/oder Spüllanze 6 ist hohl ausgebildet und weist eine Eintrittsöffnung (siehe Fig. 2) für einen Eintritt des Laserstrahls in den Lanzeninnenraum (Hohlraum) der Kühl- und/oder Spüllanze 6 auf, wobei der Lanzeninnenraum mit einem Gas-Flüssigkeitsgemisch durchströmt werden kann. Die Bearbeitung des Rohres 2 findet direkt über der Eintrittsöffnung der Kühl- und/oder Spüllanze 6 statt. Über die Eintrittsöffnung gelangt der Laserstrahl und der Schmelzaustrieb in den Lanzeninnenraum der Kühl- und/oder Spüllanze 6. Mit Hilfe der zweiphasigen Strömung (Gas-Flüssigkeitsgemisch) in dem Lanzeninnenraum der Kühl- und/oder Spüllanze 6 können beim Laserschneiden entstehende Schlacke und Dämpfe aus dem Lanzeninnenraum abgesaugt werden. Die Kühl- und/oder Spüllanze 6 sorgt damit sowohl für ein spritzerfreies und sauberes Innenrohr als auch für eine gute Wärmeabführung im Bereich der Schnittstelle. Die Erwärmung nicht beabsichtigter Teile des zu bearbeitenden Werkstücks wird vermieden.

**Fig. 2** veranschaulicht den näheren Aufbau und die Wirkungsweise der Kühl- und/oder Spüllanze 6. Die Kühl- und/oder Spüllanze 6 weist ein inneres, zweiteiliges und ein äußeres, zweiteiliges Lanzenrohr auf, wobei die jeweiligen inneren **(8a, 8b)** und äußeren **(9a, 9b)** Lanzenteile miteinander form- oder stoffschlüssig (verschraubt oder verschweißt) sind und die inneren Teile in die äußeren Teile eingesteckt sind. Es sind auch zwei einteilige oder einstückige Lanzenrohre denkbar. Das dem Laserstrahl zugeordnete Ende der Kühl- und/oder Spüllanze 6 ist bis auf eine Eintrittsöffnung **10** für den Laserstrahl geschlossen, während das andere abgewandte Ende offen und eine Absaugeinrichtung anschließbar ist. An der Kühl- und/oder Spüllanze 6 sind die Eintrittsöffnung 10 für den Laserstrahl, eine Zuführöffnung **11** für ein flüssiges Medium wie Öl oder Kühlwasser, eine Zuführöffnung **12** für ein gasförmiges Medium wie Pressluft, eine Kammer **13** und eine Düse **14** ausgebildet. Es kann ein Wasser- oder ein Ölnebel erzeugt werden.

Wenn nun der Laserstrahl über der Eintrittsöffnung 10 ein Loch in das Rohr (siehe Bezugsziffer 2 gemäß Fig. 1) geschnitten hat, kann der Laserstrahl ebenso in den Lanzeninnenraum **15** der unter dem zu bearbeitenden Werkstück bzw. in dem Rohr angeordneten Kühl- und/oder Spüllanze 6 eintreten wie Schmelzaustrieb, Schneidspritzer oder Dämpfe dort hineingelangen können. Wenn nun über die Zuführöffnung 11 und einen Ringkanal **16** Kühlwasser und über die Zuführöffnung 12 und den gemeinsamen Ringkanal 16 Pressluft zugeführt wird und in die Kammer 13 einströmt, kommt es zu einem Austritt einer Art von Wassernebel mit fein verteilten, beschleunigten "Wassertröpfchen" über die Düse 14 aus der Kammer 13 in den Lanzeninnenraum 15. Dieser Wasser- oder Sprühnebel absorbiert während der Laserschneidbearbeitung einerseits genügend Laserstrahlleistung und führt andererseits die Schneidspritzer und Dämpfe durch seine Saugwirkung ab. Das Rohrinnere wird weitgehend sauber gehalten, indem die Schneidspritzer und Dämpfe über den Lanzeninnenraum 15 abgeführt werden.

Erfindungsgemäß wird die zugeführte Flüssigkeit mit Hilfe der Düse 14 durch Zerstäuben der Flüssigkeit in den dispersen Zustand überführt. Innerhalb der Düse 14 wird Gas in der Flüssigkeit dispergiert. Dabei entsteht eine Art Spray mit kleinen Tropfen. Ein zweiphasiges Gemisch aus Gas und Flüssigkeit verlässt den Düsenaustrittsquerschnitt der Düse 14.

### BEZUGSZEICHENLISTE

- 1: Spannfutter
- 2: Rohr
- 3: Drehrichtung
- 4: Rohraußenumfangsfläche
- 5: Laserbearbeitungskopf
- 6: Kühl- und/oder Spüllanze
- 7: Ein- und Ausführrichtung
- 8a: Lanzenteil
- 8b: Lanzenteil
- 9a: Lanzenteil
- 9b: Lanzenteil
- 10: Eintrittsöffnung
- 11: Zuführöffnung
- 12: Zuführöffnung
- 13: Kammer
- 14: Düse
- 15: Lanzeninnenraum
- 16: Ringkanal

## Patentansprüche

1. Kühl- und/oder Spüllanze (6) für eine Laserbearbeitungsmaschine, insbesondere für eine Laserschneidanlage, **dadurch gekennzeichnet, dass** Mitteln (11, 16) zum Zuführen eines flüssigen Mediums und Mitteln (12, 16) zum Zuführen eines gasförmigen Mediums in eine Kammer (13) der Kühl- und/oder Spüllanze (6) angeordnet sind, wobei die Kammer (13) eine Düse (14) zum Austritt eines aus den beiden Medien erzeugten Gas-Flüssigkeitsgemischs in einen Lanzeninnenraum (15) der Kühl- und/oder Spüllanze (6) aufweist, und wobei die Kühl- und/oder Spüllanze (6) eine Eintrittsöffnung (10) für den Laserstrahl in den Lanzeninnenraum (15) und/oder den Schmelzaustrieb aufweist.

2. Kühl- und/oder Spüllanze nach Anspruch 1, **dadurch gekennzeichnet, dass** die Mittel zum Zuführen durch jeweils eine Zuführöffnung (11, 12) und einen gemeinsamen Kanal (16) zu der gemeinsamen Kammer (13) ausgebildet sind.

3. Kühl- und/oder Spüllanze nach Anspruch 1 oder 2, **dadurch gekennzeichnet, dass** die Kühl- und/oder Spüllanze (6) aus ineinander gesteckten rohrförmigen Lanzenteilen (8a, 8b, 9a, 9b) aufgebaut ist.

4. Kühl- und/oder Spüllanze nach einem der vorhergehenden Ansprüche, **dadurch gekennzeichnet, dass** die Kühl- und/oder Spüllanze (6) an eine Absaugeinrichtung für das Gas-Flüssigkeitsgemisch aus dem Lanzeninnenraum (15) anschließbar ist.

5. Kühl- und/oder Spüllanze nach einem der vorhergehenden Ansprüche, **dadurch gekennzeichnet, dass** das eine Medium Wasser und das andere Medium Pressluft ist.

6. Kühl- und/oder Spüllanze nach einem der vorhergehenden Ansprüche, **dadurch gekennzeichnet, dass** das eine Medium Öl und das andere Medium Pressluft ist.

7. Verfahren zum Absaugen von Partikeln, Gasen oder Dämpfen bei einer Laserbearbeitung, insbesondere beim Laserschneiden, **gekennzeichnet durch** eine Gas-Flüssigkeitsgemisch-Strömung unterhalb der Stelle des Werkstücks, an der die Laserbearbeitung stattfindet.

8. Verfahren nach Anspruch 7, **dadurch gekennzeichnet, dass** ein flüssiges Medium und ein gasförmiges Medium dem Bearbeitungsbereich zugeführt und dort mittels einer Düse in ein Gas-Flüssigkeitsgemisch überführt werden.

## Claims

1. Cooling and/or flushing lance (6) for a laser processing machine, in particular for a laser cutting arrangement, **characterised in that** there are provided means (11, 16) for supplying a fluid medium and means (12, 16) for supplying a gaseous medium to a chamber (13) of the cooling and/or flushing lance (6), the chamber (13) having a nozzle (14) for discharging a gas/fluid mixture which is produced from the two media into an inner space (15) of the cooling and/or flushing lance (6), and the cooling and/or flushing lance (6) having an inlet opening (10) for the laser beam into the inner space (15) of the lance and/or the molten discharge.

2. Cooling and/or flushing lance according to claim 1, **characterised in that** the supply means are formed by a supply opening (11, 12) and a common channel (16) to the common chamber (13).

3. Cooling and/or flushing lance according to claim 1 or 2, **characterised in that** the cooling and/or flushing lance (6) is constructed from tubular lance members (8a, 8b, 9a, 9b) which are fitted in each other.

4. Cooling and/or flushing lance according to any one of the preceding claims, **characterised in that** the cooling and/or flushing lance (6) can be connected to a discharge device for the gas/fluid mixture from the inner space (15) of the lance.

5. Cooling and/or flushing lance according to any one of the preceding claims, **characterised in that** one medium is water and the other medium is compressed air.

6. Cooling and/or flushing lance according to any one of the preceding claims, **characterised in that** one medium is oil and the other medium is compressed air.

7. Method for discharging particles, gases or vapours during laser processing, in particular during laser cutting, **characterised by** a gas/fluid mixture stream below the position of the workpiece at which the laser processing is carried out.

8. Method according to claim 7, **characterised in that** a fluid medium and a gaseous medium are supplied to the processing region and, at that location, are converted into a gas/fluid mixture by means of a nozzle.

## Revendications

1. Lance de refroidissement et/ou de soufflage (6) pour une machine d'usinage au laser, en particulier pour une installation de découpage au laser, **caractérisée par le fait que** des moyens (11, 16) d'amenée d'un agent fluide ou liquide et des moyens (12, 16) d'amenée d'un agent gazeux sont disposés dans une chambre (13) de la lance de refroidissement et/ou de soufflage (6), la chambre (13) présentant une buse (14) pour la sortie d'un mélange gaz-liquide généré à partir des deux agents dans une chambre intérieure (15) de la lance de refroidissement et/ou de soufflage (6) et la lance de refroidissement et/ou de soufflage (6) présentant une ouverture d'entrée (10) pour le rayon laser dans la chambre intérieure de lance (15) et/ou la matière fondue expulsée.

2. Lance de refroidissement et/ou de soufflage selon la revendication 1, **caractérisée par le fait que** les moyens d'amenée sont formés par chaque fois une ouverture d'amenée (11, 12) et un canal (16) commun menant à la chambre commune (13).

3. Lance de refroidissement et/ou de soufflage selon la revendication 1 ou 2, **caractérisée par le fait que** la lance de refroidissement et/ou de soufflage (6) est formée de parties de lance tubulaires (8a, 8b, 9a, 9b) emboîtées les unes dans les autres.

4. Lance de refroidissement et/ou de soufflage selon l'une des revendications précédentes, **caractérisée par le fait que** la lance de refroidissement et/ou de soufflage (6) peut être raccordée à un dispositif d'aspiration pour le mélange gaz-liquide de la chambre intérieure de lance (15).

5. Lance de refroidissement et/ou de soufflage selon l'une des revendications précédentes, **caractérisée par le fait qu'**un agent est de l'eau et l'autre agent de l'air comprimé.

6. Lance de refroidissement et/ou de soufflage selon l'une des revendications précédentes, **caractérisée par le fait qu'**un agent est de l'huile et l'autre agent de l'air comprimé.

7. Procédé pour aspirer des particules, des gaz ou des vapeurs lors d'un usinage au laser, en particulier lors du découpage au laser, **caractérisé par** un courant de mélange gaz-liquide sous le point ou l'endroit de la pièce où s'effectue l'usinage au laser.

8. Procédé selon la revendication 7, **caractérisé par le fait qu'**un agent liquide et un agent gazeux sont amenés à la zone d'usinage et y sont transformés en mélange gaz-liquide au moyen d'une buse.
